# EUROPÄISCHE PATENTSCHRIFT

(11) **EP 0 943 661 B1**
(45) Veröffentlichungstag und Bekanntmachung des Hinweises auf die Patenterteilung: **23.10.2002**
(21) Anmeldenummer: 99103890.2
(22) Anmeldetag: 01.03.1999
(51) Int. Cl.: C09B 19/00, C09B 57/00, G02F 1/35

(54) **Chromophore Verbindungen und Verfahren zu ihrer Herstellung**
Chromophoric compounds and their preparation process
Composés chromophores et leur procédé de fabrication

(30) Priorität: 09.03.1998 DE 19810030
(43) Veröffentlichungstag der Anmeldung: 22.09.1999
(73) Patentinhaber: SIEMENS AKTIENGESELLSCHAFT, 80333 München (DE)
(72) Erfinder: Kanitz, Andreas Dr., 91333 Höchstadt (DE); Hartmann, Horst Prof. Dr., 06217 Merseburg (DE); Fricke, Christian Dr., 14050 Berlin (DE)

(56) Entgegenhaltungen:
- EP-A- 0 177 317
- CH-A- 619 476
- GB-A- 2 284 427
- US-A- 5 529 864
- C.O. OKAFOR: "Synthesis, Properties and Uses of Angular Phenoxazines" DYES AND PIGMENTS, Bd. 7, 1986, Seiten 103-106, XP002122264 ELSEVIER APPLIED SCIENCE PUBLISHERS. BARKING.; GB
- NAGARAPU ET AL: "New 1,4-benzoxazine fused heterocycles" INDIAN JOURNAL OF CHEMISTRY, SECTION B: ORGANIC, , Bd. 37b , Nr. 1, 1998, Seiten 39-42, XP002122265 PUBLICATIONS & INFORMATIONS DIRECTORATE, NEW DELHI.; IN
- LEWIS M.R. ET AL.: 'In Vivo staining of Fat in Tumor Bearing Mice by Benzo(a)phenoxazine Dyes' PROC. SOC. EXPT. BIOL. MED. Bd. 78, 1951, Seiten 406 - 410
- STUZKA V. ET AL.: 'Oxazine als azidobasische Indikatoren' COLLECT. CZECH. CHEM. COMMUN. Bd. 34, 1969, Seiten 221 - 228
- BECKER H.G.O. ET AL.: 'Organikum', 1990, DEUTSCHER VERLAG DER WISSENSCHAFTEN, BERLIN

## Beschreibung

Die vorliegende Erfindung betrifft neue chromophore Verbindungen sowie ein Verfahren zu ihrer Herstellung.

Chromophore Verbindungen, das weißt nichtlinear-optische Chromophore, stellen die wesentliche Komponente für sogenannte organische Leitermaterialien dar, d.h. für elektrisch leitfähige Materialien. Organische Leitermaterialien finden Anwendung als elektrooptische und photonische Bauelemente, insbesondere Schalter, sowie in Bereichen der Informationsverarbeitung und der integrierten Optik, wie optische chip-to-chip-Verbindungen, waveguiding in elektrooptischen Schichten, bei der optischen Signalverarbeitung in der Sensorik und dergleichen.

Im allgemeinen weisen chromophore Systeme konjugierte π-Elektronensysteme im Molekül auf und tragen an geeigneten Positionen des π-Elektronensystems Elektronendonoren- bzw. acceptoren.

In der EP 0 177 317 B1 sind Leuco-Farbstoffe überwiegend vom Benzo[a]phenothiazin-Typ beschrieben, welche einen Elektronenakzeptor am Ringsystem tragen.

C.O. Okafor beschreibt in "Synthesis, Properties and Uses of Angular Phenoxazines, Dyes and Pigments, Bd. 7, 1986, Seiten 103-106, XP002122264 Elsevier Applied Science Publishers. Barking" angulare Phenoxazine, insbesondere wird auf eine Gruppe von biologischen Farbstoffen, die Phenylimino-9-dialkylamino-benzo[a]phenoxazine, verwiesen, welche Fett in vivo färben.

Diese Gruppe von Verbindungen, wie sie näher von M.R. Lewis et. Al. in "In Vivo staining of Fat in Tumor Bearing Mice by Benzo(a)phenoxazine Dyes", Proc. Soc. Expt. Biol. Med., 1951, Band 78, Seiten 406 bis 410, beschrieben ist, zeigt ihre färbenden Eigenschaften erst in protonierter, d.h. in Salzform. Durch die Protonierung wird ein bathochromer Shift zu höheren Wellenlängen erreicht. Beispielsweise zeigt ein 5-Phenylimino-9-dimethylaminobenzo[a]phenoxazin einen λ-Wert von 513 nm, wohingegen die protonierte Form dieser Verbindung einen λ-Wert von 650 nm aufweist. Dieser Einfluss der Protonierung und Protonabspaltung an Donor-/Akzeptorsubstituierten Chromophoren, im Hinblick auf deren Absorptionseigenschaften, ist von V. Stuzka et. Al., "Oxazine als azidobasische Indikatoren", Collect. Czech. Chem. Commun., 1969, Band 34, Seiten 221 bis 228 beschrieben.

Solche Verbindungen sind jedoch als nichtlinear-optische (NLO) Chromophore nicht geeignet, da sie sich im elektrischen Feld nicht ausrichten lassen.

Als NLO-aktive Chromophore sind solche mit hohem Dipolmoment µ, hoher Hyperpolarisierbarkeit β- und geeigneten Absorptionseigenschaften λ sowie mit einer hohen nichtlinearoptischen Aktivität von großem Interesse. Für die verschiedenen Einsatzgebiete sollten sie auch eine hohe Thermostabilität aufweisen. Die aus dem Stand der Technik bekannten Systeme sind aber sehr empfindlich gegenüber hohen Temperaturen.

Aufgabe der vorliegenden Erfindung ist es demnach, neue nichtlinear-optische Chromophore mit den vorgenannten Eigenschaften zur Verfügung zu stellen, welche sich in einfacher Weise aus leicht zugänglichen Ausgangsstoffen und in hoher Reinheit herstellen lassen.

Diese Aufgabe konnte durch die erfindungsgemäßen Verbindungen und das Verfahren zu ihrer Herstellung gelöst werden.

Gegenstand der vorliegenden Erfindung sind demnach nichtlinear-optische chromophore Verbindungen der allgemeinen Formel 1 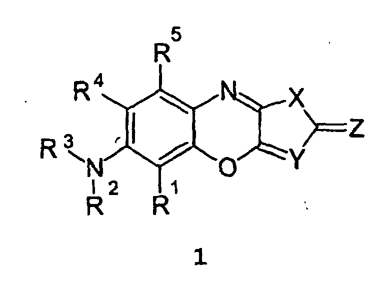 wobei
- R¹, R⁴ R⁵,: jeweils ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, oder ein Aryl-oder Heteroarylrest sind;
- R², R³: jeweils ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, ein Benzylrest oder ein Aryl- oder Heteroarylrest sind; wobei gegebenenfalls einer der Reste R² und R³ eine Hydroxyl- oder Carboxylgruppe aufweist,
oder
- R¹ und R² und/oder R³ und R⁴ und/oder R² und R³: jeweils eine zur gemeinsamen Ausbildung eines 5- oder 6-gliedrigen Ringes geeignete funktionelle Gruppe umfassen, oder einen solchen gesättigten oder ungesättigten Ring darstellen;
- Z: eine Elektronenakzeptor-substituierte Methylen-oder Iminogruppe ist;
- X: für S, O, NR⁶ oder eine Ringdoppelbindung oder für 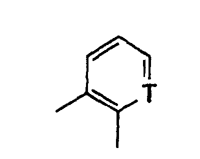 steht, wobei R⁶ ein Wasserstoffatom, ein linearer oder verzweigter C₁- bis C₂₀-Alkylrest oder ein Phenyl- oder Naphthylrest ist und T für CH oder N steht oder gegebenenfalls Z und T zusammen eine Struktur vom Typ =N-SO₂-C≡ oder =N-CS-C≡ oder =N-CO-C steht, wobei R⁶ ein Wasserstoffatom, ein linearer oder verzweigter C₁- bis C₂₀-Alkylrest oder ein Phenyl- oder Naphthylrest ist und T für CH oder N steht oder gegebenenfalls Z und T zusammen eine Struktur vom Typ = =N-SO₂-C≡ oder =N-CO-C≡ bilden; und
- Y: ein CH- oder CR⁷-Gruppe oder N ist, wobei R⁷ ein linearer oder verzweigter C₁- bis C₂₀-Alkylrest oder ein Phenyl- oder ein Naphthylrest ist.
und die Verbindung einen λₘₐₓ-Wert von > 600 nm, gemessen in DMF, aufweist.

Bei einer bevorzugten Ausführungsform der vorliegenden Erfindung bedeuten die Reste R¹, R⁴ und R⁵ jeweils ein Wassertoff-atom. Die Reste R² und R³ bedeuten - unabhängig voneinander - bevorzugt einen C₂- bis C₇-Alkylrest, am bevorzugtesten eine Ethyl-, Butyl- oder Heptylgruppe. Vorteilhaft weist einer der Reste R² und R³ eine funktionelle Gruppe in Form einer Hydroxyalkyl- oder Carboxyalkylgruppe (mit endständiger OH- bzw. COOH-Gruppe) auf, beispielsweise eine Hydroxyethylgruppe.

Für den Fall, daß die Reste R¹, R², R³, R⁴ und/oder R⁵ einen Heteroarylrest bedeuten, wird dieser vorzugsweise aus der Gruppe ausgewählt, welche durch die Thiophene, Thiazole und Pyridine gebildet ist, d.h. es liegt ein Thienyl-, Thiazolyloder Pyridylrest vor; Arylreste sind vorzugsweise Phenyloder Naphthylreste.

Im Rahmen der vorliegenden Erfindung stellen solche Verbindungen der oben angegebenen allgemeinen Formel 1 bevorzugte Verbindungen dar, in denen die Reste R¹ und R² zur gemeinsamen Ausbildung eines 5- oder 6-gliedrigen Ringes geeignete funktionelle Gruppen aufweisen.

Auch die Reste R³ und R⁴ der allgemeinen Formel 1 können zur gemeinsamen Ausbildung eines 5- oder 6-gliedrigen Ringes geeignete funktionelle Gruppen aufweisen. Darüber hinaus können die Reste R¹ und R² sowie R³ und R⁴ zusammen jeweils einen solchen gesättigten oder ungesättigten, substituierten oder unsubstituierten 5- oder 6-Ring darstellen.

Bei einer weiteren bevorzugten Ausführungsform der Erfindung umfassen die Reste R² und R³ gemäß der oben angegebenen allgemeinen Formel 1 ebenfalls funktionelle Gruppen, welche zur gemeinsamen Ausbildung eines 5- oder 6-gliedrigen Ringes geeignet sind; dieser Ring weist gegebenenfalls eine direkt oder über einen aliphatischen Kohlenwasserstoffrest gebundene OH- oder COOH-Gruppe auf. Wie im Fall für R¹ und R² sowie R³ und R⁴ können dabei 5- bzw. 6-Ringe gebildet werden, welche substituiert oder unsubstituiert sowie gesättigt oder ungesättigt sein können. Das Ringsystem ist jedoch vorzugsweise gesättigt und weist in einer weiteren bevorzugten Ausführungsform neben dem ursprünglichen Stickstoffatom noch wenigstens ein weiteres Stickstoff- oder Sauerstoffatom im Ring auf. Dieser Ring kann ebenfalls wieder substituiert oder-unsubstituiert sein.

Wenn Substituenten am Ring vorhanden sind, handelt es sich dabei in einer weiteren bevorzugten Ausführungsform um weitere funktionelle Gruppen, wie beispielsweise Hydroxyalkyloder Carboxyalkylgruppen. Durch eine geeignete Auswahl der Funktionalitäten der Reste R² und R³ können diese Ringgruppierungen vom Morpholin- bzw. Piperazintyp ergeben. Bevorzugt sind dabei Morpholin-4-yl-, Piperazin-1-yl und 4-(C₁- bis C₄-Alkyl)-piperazin-1-yl-Gruppen, beispielsweise die 4-Methylpiperazin-1-yl- und die 4 -(2-Hydroxyethyl)-piperazin-1-yl-Gruppe.

Besonders bevorzugte Reste bzw. Atomgruppen der oben angegebenen Formel 1 sind für R¹, R⁴ und R⁵ Wasserstoffatome, für R² und R³ Ethyl-, Butyl-, Heptyl- oder Hydroxyethylgruppen, für X Schwefel oder ein unsubstituierter 1,2-anellierter Benzolring, für Y die Gruppe -CH, für Z eine Dicyanomethylen-, Alkoxycarbonyl-cyanomethylen-, Cyanimino- oder Alkoxycarbonyliminogruppe sowie für Z und T zusammen die Gruppe =N-SO₂-C≡. Besonders bevorzugte Verbindungen der allgemeinen Formel 1 sind jene, deren Herstellung in den Beispielen beschrieben ist. Das sind:
Benzo[a]-5-dicyanomethylen-9-[N,N-diethyl-amino]-7,12-phenoxazin
Benzo[a]-5-dicyanomethylen-9-[N,N-di(n-butyl)-amino]-7,12-phenoxazin
Benzo[a]-5-dicyanomethylen-9-[N-(n-butyl)-N-(2-hydroxyethyl)-amino]-7,12-phenoxazin
Benzo[a]-5-dicyanomethylen-9-[N-(n-heptyl)-N-(2-hydroxyethyl)-amino]-7,12-phenoxazin
2-Dicyanomethylen-6-[N,N-diethyl-amino]-thieno[4,5-b]benzo-4,9-oxazin
9-[N-(n-Heptyl)-N-(2-hydroxyethyl)-amino]-benzo[d]isothiazolo-[3,3a,4-ab]-phen-7,12-oxazin-4-dioxid.

Die erfindungsgemäßen Verbindungen können also im weitesten Sinne als Oxazinderivate aufgefaßt werden, insbesondere aber als Benzoxazine und Phenoxazine.

Die vorstehend angegebenen Verbindungen sind sogenannte nichtlinear-optische Chromophore mit hohem µ-Wert und gleichzeitig hohen β- und geeigneten λₘₐₓ-Werten. Geeignete λₘₐₓ-Werte sind größer als 600 nm und betragen bevorzugt etwa 700 nm. Die Chromophore können auf einfache und wirtschaftliche Weise aus leicht zugänglichen Ausgangsstoffen in hoher Reinheit erhalten werden.

Gegenstand der vorliegenden Erfindung ist demnach auch ein Verfahren zur Herstellung von chromophoren Verbindungen der allgemeinen Formel 1 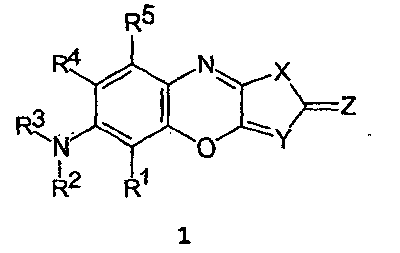 indem man ein entsprechendes 5-Amino-2-nitroso-phenol oder ein mineralsaures Salz davon der allgemeinen Formel 2 mit einer methylenaktiven Verbindung der allgemeinen Formel 3A bzw. der tautomeren Form 3B 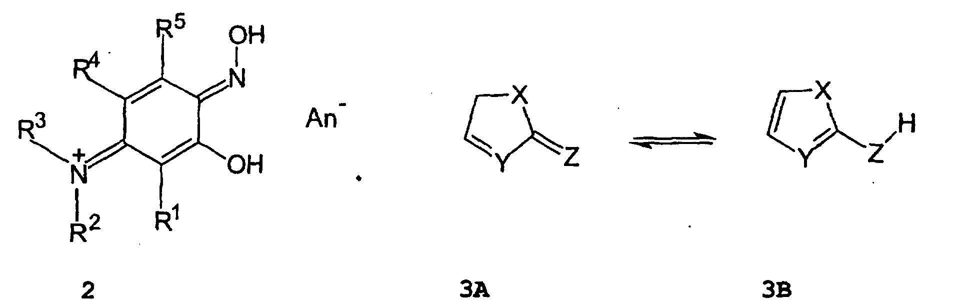 bei erhöhter Temperatur in einem polaren Lösungsmittel und in Gegenwart einer Base kondensiert. Die Base ist beispielsweise Triethylamin.

In den vorstehenden Formeln 2 und 3A bzw. 3B besitzen die Reste R¹, R², R³, R⁴ und R⁵ sowie X, Y und Z die für die Formel 1 angegebene Bedeutung.

Sowohl die Verbindungen der Formel 2 als auch die methylenaktiven Verbindungen der Formel 3A bzw. deren tautomerer Form 3B sind leicht zugängliche Ausgangsmaterialien, so daß die Herstellung der Verbindungen der Formel 1 in wirtschaftlicher Ausbeute durchgeführt werden kann. Die 5-Amino-2-nitrosophenole der Formel 2 lassen sich in einfacher Weise durch Nitrosierung der entsprechenden 3-Amino-phenole herstellen. Die dabei erhaltenen 5-Amino-2-nitroso-phenole können vorzugsweise im äquimolaren Verhältnis mit den entsprechenden methylenaktiven Verbindungen umgesetzt werden.

Geht man von den mineralsauren Salzen der Verbindungen der Formel 2 aus, so bedeutet An⁻ das Anion einer beliebigen Mineralsäure, wie ein Chlorid-, Bromid- oder Iodid- sowie Perchlorat-, Tetrafluorborat- oder Tetraphenylboratanion. Besonders bevorzugte Anionen im Verbindungstyp 2 sind die Anionen solcher Säuren, die gut kristallisierende Salze ergeben. Das sind vorzugsweise das Chlorid- oder Perchloratanion. Als polares Lösungsmittel wird bevorzugt Dimethylformamid, Dimethylacetamid oder N-Methyl-pyrrolidon verwendet. Geeignete und deshalb bevorzugte Reaktionstemperaturen liegen zwischen 120 und 150°C.

Die genannten Edukte werden vorzugsweise im äquimolaren Verhältnis miteinander umgesetzt. Die gebildeten Produkte werden durch Verdünnen der Reaktionslösung mit einem weniger polaren Lösungsmittel, wie Diethylether oder einem niederen Alkanol, ausgefällt und durch Absaugen isoliert und gegebenenfalls durch Umkristal'lisation oder Chromatographie gereinigt.

Demgemäß wird das erfindungsgemäße Verfahren bevorzugt derart durchgeführt, daß man die Kondensation der Verbindung der allgemeinen Formel 2 mit der Verbindung der allgemeinen Formel 3A bzw. 3B - im äquimolaren Verhältnis - in Dimethylformamid, Dimethylacetamid oder N-Methyl-pyrrolidon bei einer Temperatur zwischen 120 und 150°C durchführt.

Im folgenden wird die Erfindung durch die angegebenen Beispiele näher erläutert, wobei in den Beispielen 1 bis 4 die Herstellung von mineralsauren Salzen 5-amino-substituierter 2-Nitroso-phenole und in den Beispielen 5 und 6 die Herstellung von methylenaktiven Nitrilen angegeben ist. Die Beispiele 7 bis 12 beschreiben die Herstellung von chromophoren Verbindungen, welche gemäß der vorliegenden Erfindung besonders bevorzugt sind. Die in den Beispielen verwendeten Abkürzungen bedeuten: Fp. = Fusionspunkt (Schmelzpunkt) ; Zers. = Zersetzung.

### Beispiel 1

### 5-Diethylamino-2-nitroso-phenol-hydrochlorid

0,1 mol 3-Diethylamino-phenol werden in 50 ml mit gasförmigem Chlorwasserstoff gesättigtem n-Propanol gelöst und bei 0°C unter Rühren tropfenweise mit 0,1 mol Isoamylnitrit versetzt. Nach weiterem 1-stündige Rühren wird die Reaktionslösung mit Diethylether versetzt und das gebildete Produkt durch Absaugen isoliert.
Ausbeute: 71 %, Fp.: 175 - 177°C.

### Beispiel 2

### 5-[N,N-Di-(n-butyl)-amino]-2-nitroso-phenol-hydrochlorid

Analog Beispiel 1 wird aus 3- [N,N-Di-(n-butyl)-amino]-phenol und Isoamylnitrit die Titelverbindung erhalten.
Ausbeute: 53 %, Fp.: 160°C (Zers.).

### Beispiel 3

### 5- [N-(n-Butyl)-N-(2-hydroxyethyl)-amino]-2-nitroso-phenolhydrochlorid

Analog Beispiel 1 wird aus 3-[N-(n-Butyl)-N- (2-hydroxyethyl)-amino]-phenol und Isoamylnitrit die Titelverbindung erhalten. Ausbeute: 76 %, Fp.: 127°C (Zers.).

### Beispiel 4

### 5-[N- (n-Heptyl) -N-(2-hydroxyethyl)-amino]-2-nitroso-phenolhydrochlorid

Analog Beispiel 1 wird aus 3-[N-(n-Heptyl)-N-(2-hydroxyethyl)-amino]-phenol und Isoamylnitrit die Titelverbindung erhalten.
Ausbeute: 62 %, Fp.: 129°C (Zers.).

### Beispiel 5

### 1-Napthyl-malonsäuredinitril

Zu einer Lösung von 0,65 mol Lithium-diisopropylamid in Benzol werden unter Rühren und Kühlen 0,3 mol 1-Naphthyl-acetonitril und anschließend tropfenweise 0,6 mol 2-Chlor-benzylrhodanid zugefügt. Nach einer Stunde wird die Reaktionsmischung in 1 l 0,3 molare NaOH eingebracht und nach einigem Stehen in die beiden sich bildenden Phasen getrennt. Die wäßrige Lösung wird durch Zugabe von Salzsäure neutralisiert und über Nacht stehen gelassen. Das ausgefallene Produkt wird abgesaugt, getrocknet und durch Umkristallisieren aus Ethanol gereinigt.
Ausbeute: 32 %, Fp.: 165°C.

### Beispiel 6

### 2-Thienyl-malonsäuredinitril

### Variante a:

Analog Beispiel 5 wird aus 0,1 mol 2-Thienyl-acetonitril, 0,3 mol Lithium-diisopropylamid und 0,2 mol 2-Chlor-benzylrhodanid die Titelverbindung erhalten.
Ausbeute: 24 %, farbloses Öl.

### Variante b:

0,13 mol Malonsäuredinitril werden in 100 ml wasserfreiem Tetrahydrofuran unter Rühren und Kühlen portionsweise mit 0,15 mol Natriumhydrid versetzt. Anschließend werden 0,0015 mol Palladiumchlorid-Triphenylphosphin-Komplex zugegeben und 25 g 2-Iod-thiophen tropfenweise zugesetzt, dann wird die Mischung 3 h unter Rückfluß erhitzt. Nach dem Erkalten wird mit Salzsäure neutralisiert und mit Diethylether extrahiert. Nach Abtrennen und Trocknen der etherischen Lösung wird der Ether verdampft und das verbleibende ölige Reaktionsprodukt für die weiteren Umsetzungen eingesetzt.

### Beispiel 7

### Benzo[a]-5-dicyanomethylen-9-[N,N-diethyl-amino]-7,12-phenoxazin

### Variante a:

0,01 mol des nach Beispiel 1 hergestellten Hydrochlorids von 5-Diethylamino-2-nitroso-phenol werden mit 0,01 mol des nach Beispiel 5 hergestellten 1-Naphthyl-malonsäuredinitrils und mit 0,02 mol Triethylamin in 15 ml Dimethylformamid (DMF) kurzzeitig zum Sieden erhitzt. Nach dem Abkühlen wird die Reaktionsmischung mit Wasser verrührt und vom ausfallenden Festprodukt dekantiert. Das Festprodukt wird in Dichlorethan gelöst und nach dem Trocknen und Einengen säulenchromatographisch an Kieselgel unter Verwendung von Essigsäureethylester als mobile Phase gereinigt.
Ausbeute: 85%; Fp.: 262 - 263°C; λₘₐₓ: 700 nm (in DMF).

### Variante b:

Es wird analog Variante a gearbeitet. Anstelle des Hydrochlorids von 5-Diethylamino-2-nitroso-phenol wird jedoch die freie Base eingesetzt, und es wird auf die Verwendung von Triethylamin verzichtet.

### Beispiel 8

### Benzo[a]-5-dicyanomethylen-9-[N,N-di-(n-butyl)-amino]-7,12-phenoxazin

Analog Beispiel 7 wird aus dem nach Beispiel 2 hergestellten Hydrochlorid von 5-[N,N-Di-(n-butyl)-amino]-2-nitroso-phenol und dem nach Beispiel 5 hergestellten 1-Naphthyl-malonsäuredinitril die Titelverbindung erhalten.
Ausbeute: 42%; Fp.: 153 - 155°C; λₘₐₓ: 701 nm (DMF).

### Beispiel 9

### Benzo[a]-5-dicyanomethylen-9-[N-(n-butyl)-N-(2-hydroxyethyl)-amino]-7,12-phenoxazin

Analog Beispiel 7 wird aus dem nach Beispiel 3 hergestellten Hydrochlorid von 5-[N-(n-butyl)-N-(2-hydroxyethyl)-amino]-2-nitroso-phenol und dem nach Beispiel 5 hergestellten 1-Naphthyl-malonsäuredinitril die Titelverbindung erhalten.
Ausbeute: 30 %; Fp.: 190°C; λₘₐₓ: 699 nm (DMF).

### Beispiel 10

### Benzo[a]-5-dicyanomethylen-9-[N- (n-heptyl)-N-(2-hydroxyethyl)-amino]-7,12-phenoxazin

Analog Beispiel 7 wird aus dem nach Beispiel 4 hergestellten Hydrochlorid von 5-[N-(n-Heptyl)-N-(2-hydroxyethyl)-amino]-2-nitroso-phenol und dem nach Beispiel 5 hergestellten 1-Naphthyl-malonsäuredinitril die Titelverbindung erhalten.
Ausbeute: 28 %, Fp.: 155 - 157°C, λₘₐₓ: 701 nm (DMF).

### Beispiel 11

### 2-Dicyanomethylen-6-[N,N-diethyl-amino]-thieno[4,5-b]benzo-4,9-oxazin

Analog Beispiel 7 wird aus dem nach Beispiel 1 hergestellten Hydrochlorid von 5-Diethylamino-2-nitroso-phenol und dem nach Beispiel 6 hergestellten 2-Thienyl-malonsäuredinitril die Titelverbindung erhalten.
Ausbeute: 23 %; Fp.: 260°C; λₘₐₓ: 657 nm (DMF).

### Beispiel 12

### 9-[N-(n-Heptyl)-N-(2-hydroxyethyl)-amino]-benzo[d]isothiazolo[3,3a,4-ab]-phen-7,12-oxazin-4-dioxid

Analog Beispiel 7 wird aus dem nach Beispiel 4 hergestellten Hydrochlorid von 5-[N-(n-Heptyl)-N-(2-hydroxyethyl)-amino]-2-nitroso-phenol und 1,8-Naphthosultam die Titelverbindung erhalten, welche folgende Struktur aufweist: 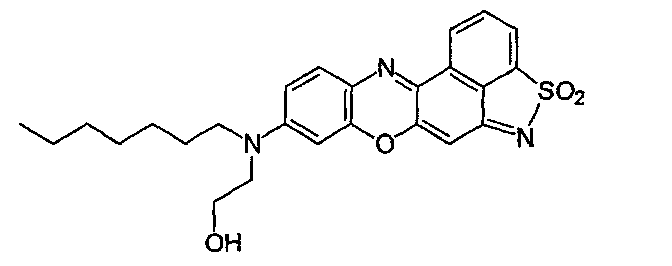 Ausbeute: 35 %; Fp.: 178 - 180°C; λₘₐₓ: 613 nm (DMF).

Die erfindungsgemäßen Verbindungen eignen sich insbesondere als chromophore Bestandteile für nichtlinear-optisch aktive Polymere bzw. daraus hergestellte elektrooptische und photonische Bauelemente.

## Patentansprüche

1. Chromophore Verbindung der allgemeinen Formel 1 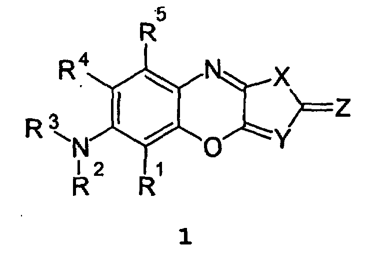 wobei
R¹, R⁴ R⁵, jeweils ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, oder ein Aryl- oder Heteroarylrest sind;
R², R³ jeweils ein Wasserstoffatom, ein linearer oder verzweigter C₁- bis C₂₀-Alkylrest, welcher gegebenenfalls durch 1 bis 5 Sauerstoffatome in Etherfunktion unterbrochen ist, ein Benzylrest oder ein Aryl- oder Heteroarylrest sind, wobei gegebenenfalls einer der Reste R² und R³ eine Hydroxyl- oder Carboxylgruppe aufweist,
oder
R¹ und R² und/oder R³ und R⁴ und/oder R² und R³ jeweils eine zur gemeinsamen Ausbildung eines 5- oder 6-gliedrigen Ringes geeignete funktionelle Gruppen umfassen, oder einen solchen gesättigten oder ungesättigten Ring darstellen;
Z eine Elektronenakzeptor -substituierte Methylen- oder Iminogruppe ist;
X für S, O, NR⁶ oder eine Ringdoppelbindung oder für 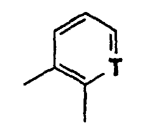 steht, wobei R⁶ ein Wasserstoffatom, ein linearer oder verzweigter C₁- bis C₂₀-Alkylrest oder ein Phenyl- oder Naphthylrest ist und T für CH oder N steht oder gegebenenfalls Z und T zusammen eine Struktur vom Typ =N-SO₂-C≡, =N-CS-C≡ oder =N-CO-C≡ bilden; und
Y ein CH- oder CR⁷-Gruppe oder N ist, wobei R⁷ ein linearer oder verzweigter C₁- bis C₂₀-Alkylrest oder ein Phenyl- oder ein Naphthylrest ist.
und die Verbindung einen λₘₐₓ-Wert von > 600 nm, gemessen in DMF, aufweist.

2. Verbindung nach Anspruch 1, **dadurch gekennzeichnet, dass** die Reste R¹, R⁴ und R⁵ jeweils ein Wasserstoffatom bedeuten.

3. Verbindung nach Anspruch 1 oder 2, **dadurch gekennzeichnet, dass** die Reste R² und R³, gleich oder verschieden voneinander, einen C₂- bis C₇-Alkylrest aufweisen.

4. Verbindung nach Anspruch 1, **dadurch gekennzeichnet, dass** für den Fall, dass R¹, R², R³, R⁴ und/oder R⁵ ein Heteroarylrest ist, dieser aus der Gruppe ausgewählt ist, welche durch die Thiophene, Thiazole und Pyridine gebildet ist, und bei einem Arylrest durch die Benzole und Naphtaline.

5. Verbindung nach Anspruch 1 oder 3, **dadurch gekennzeichnet, dass** einer der Reste R² und R³ eine Hydroxyalkyl- oder Carboxyalkylgruppe aufweist.

6. Verbindung nach Anspruch 1, **dadurch gekennzeichnet, dass** ein aus R² und R³ gebildetes Ringsystem neben dem Stickstoffatom wenigstens ein weiteres Heteroatom enthält und gegebenenfalls durch Hydroxyalkyl- oder Carboxyalkylgruppen substituiert ist.

7. Verbindung nach einem der Ansprüche 1 bis 6, **dadurch gekennzeichnet, dass** X Schwefel oder ein unsubstituierter 1,2-annelierter Benzolring ist.

8. Verbindung nach einem der Ansprüche 1 bis 7, **dadurch gekennzeichnet, dass** Y eine CH-Gruppe ist.

9. Verbindung nach einem der Ansprüche 1 bis 8, **dadurch gekennzeichnet, dass** Z eine Dicyanomethylen-, Alkoxycarbonyl-cyanomethylen-, Cyanimino- oder Alkoxycarbonyliminogruppe ist.

10. Verbindung nach einem der Ansprüche 1 bis 8, daduch **gekennzeichnet**, dass Z und T zusammen =N-SO₂-C≡ bedeuten.

11. Verfahren zur Herstellung einer chromophoren Verbindung der allgemeinen Formel 1 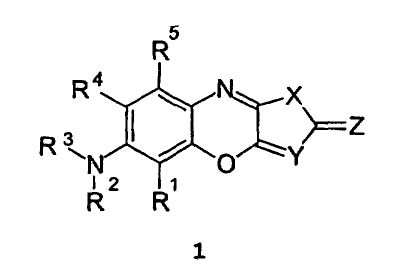 **dadurch gekennzeichnet, dass** ein 5-Amino-2-nitroso-phenol oder ein mineralsaures Salz davon der allgemeinen Formel 2 mit einer methylenaktiven Verbindung der allgemeinen Formel 3A bzw. 3B 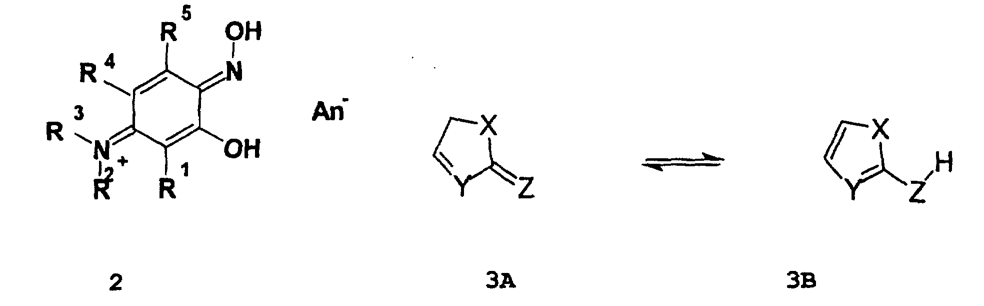 bei erhöhter Temperatur in einem polaren Lösungsmittel und in Gegenwart einer Base kondensiert wird, wobei die Reste R¹, R², R³, R⁴ und R⁵ sowie X, Y und Z die im Anspruch 1 angegebene Bedeutung besitzen.

12. Verfahren nach Anspruch 11, **dadurch gekennzeichnet, dass** die Kondensation der Edukte 2 und 3A bzw. 3B im äquimolaren Verhältnis in Dimethylformamid, Dimethylacetamid oder N-Methyl-pyrrolidon bei einer Temperatur zwischen 120 und 150°C durchgeführt wird.

13. Verwendung einer chromophoren Verbindung der allgemeinen Formel 1 entsprechend Anspruch 1, worin R¹, R², R³, R⁴ und R⁵ sowie X, Y und Z die angegebene Bedeutung besitzen, zur Herstellung von elektrooptischen und photonischen Bauelementen.

## Claims

1. Chromophoric compound of the general formula 1 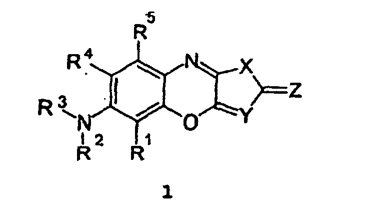 where
R¹, R⁴ and R⁵ are each a hydrogen atom, a linear or branched C₁ to C₂₀ alkyl radical which is uninterrupted or interrupted by from 1 to 5 oxygen atoms in ether function, or an aryl or heteroaryl radical;
R² and R³ are each a hydrogen atom, a linear or branched C₁ to C₂₀ alkyl radical which is uninterrupted or interrupted by from 1 to 5 oxygen atoms in ether function, a benzyl radical or an aryl or heteroaryl radical, one of the radicals R² and R³ containing a hydroxyl or carboxyl group if desired,
or
R¹ and R² and/or R³ and R⁴ and/or R² and R³ are each a functional group suitable for conjointly forming a 5-membered or 6-membered ring, or constitute a saturated or unsaturated ring of this kind;
Z is an electron acceptor-substituted methylene or imino group;
X is S, O, NR⁶ or a ring double bond or is 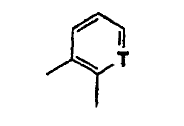 where R⁶ is a hydrogen atom, a linear or branched C₁ to C₂₀ alkyl radical or a phenyl or naphthyl radical and T is CH or N or, if desired, Z and T together form a structure of the =N-SP₂-C≡, =N-CS-C≡ or =N-CO-C≡ type; and
Y is a CH group or a CR⁷ group or N, R⁷ being a linear or branched C₁ to C₂₀ alkyl radical or a phenyl or a naphthyl radical
and the compound has a λₘₐₓ of > 600 nm, measured in DMF.

2. Compound according to Claim 1, **characterized in that** the radicals R¹, R⁴ and R⁵ are each a hydrogen atom.

3. Compound according to Claim 1 or 2, **characterized in that** the radicals R² and R³, identical to or different from one another, comprise a C₂ to C₇ alkyl radical.

4. Compound according to Claim 1, **characterized in that** where R¹, R², R³, R⁴ and/or R⁵ is a heteroaryl radical this radical is selected from the group consisting of the thiophenes, thiazoles and pyridines and in the case of an aryl radical of the benzenes and naphthalenes.

5. Compound according to Claim 1 or 3, **characterized in that** one of the radicals R² and R³ comprises a hydroxyalkyl or carboxyalkyl group.

6. Compound according to Claim 1, **characterized in that** a ring system formed from R² and R³ comprises, in addition to the nitrogen atom, at least one further heteroatom and is unsubstituted or substituted by hydroxyalkyl or carboxyalkyl groups.

7. Compound according to one of Claims 1 to 6, **characterized in that** X is sulphur or an unsubstituted 1,2-fused benzene ring.

8. Compound according to one of Claims 1 to 7, **characterized in that** Y is a CH group.

9. Compound according to one of Claims 1 to 8, **characterized in that** Z is a dicyanomethylene, alkoxycarbonylcyanomethylene, cyanoimino or alkoxycarbonylimino group.

10. Compound according to one of Claims 1 to 8, **characterized in that** Z and T together are =N-SO₂-C≡.

11. Process for preparing a chromophoric compound of the general formula 1 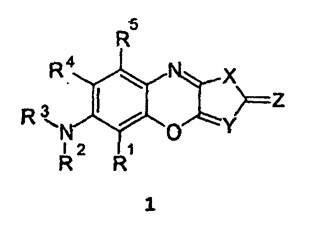 **characterized in that** a 5-amino-2-nitrosophenol or a mineral-acid salt thereof of the general formula 2 is condensed with a methylene-active compound of the general formula 3A and/or 3B 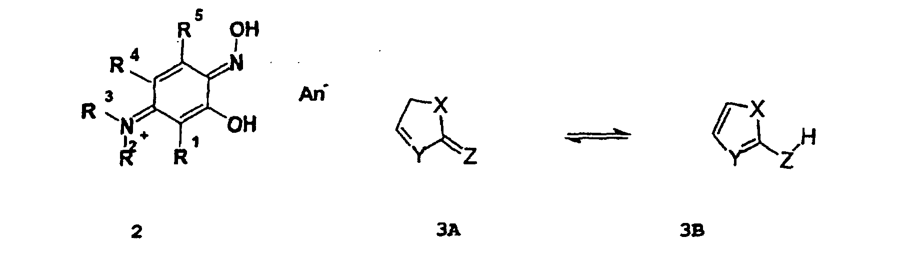 at elevated temperature in a polar solvent and in the presence of a base, the radicals R¹, R², R³, R⁴ and R⁵ and also X, Y and Z being as defined in Claim 1.

12. Process according to Claim 11, **characterized in that** the condensation of the reactants 2 and 3A and/or 3B is conducted in an equimolar ratio in dimethylformamide, dimethylacetamide or N-methylpyrrolidone at a temperature between 120 and 150°C.

13. Use of a chromophoric compound of the general formula 1 in accordance with Claim 1, in which R¹, R², R³, R⁴ and R⁵ and also X, Y and Z are as defined, for producing electrooptical and photonic components.

## Revendications

1. Composé chromophore de Formule développée 1 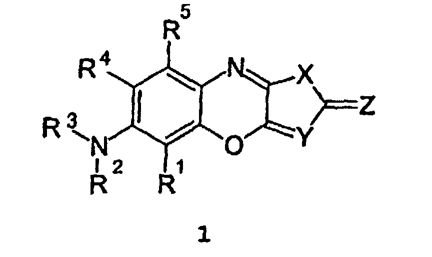 dans laquelle
R¹, R⁴, R⁵ sont respectivement un atome d'hydrogène, un radical alcoyle linéaire ou ramifié ayant de 1 à 20 atomes de carbone qui est éventuellement interrompu par 1 à 5 atomes d'oxygène en fonction étheroxyde, ou un radical aryle ou hétéroaryle ;
R², R³ sont respectivement un atome d'hydrogène, un radical alcoyle linéaire ou ramifié ayant de 1 à 20 atomes de carbone qui est éventuellement interrompu par de 1 à 5 atomes d'oxygène en fonction étheroxyde, un radical benzyle ou un radical aryle ou hétéroaryle, l'un des radicaux R² et R³ ayant éventuellement un groupe hydroxyle ou carboxyle,
ou
R¹ et R² et/ou R³ et R⁴ et/ou R² et R³ comprennent respectivement un groupe fonctionnel propre à la constitution commune d'un cycle à 5 chaînons ou à 6 chaînons, ou représentent un cycle de ce genre saturé ou insaturé ;
Z est un groupe méthylène ou imino substitué par un accepteur d'électrons ;
X représente S, O, NR⁶ ou une double liaison dans un cycle, ou représente 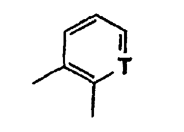 R⁶ étant un atome d'hydrogène, un radical alcoyle linéaire ou ramifié ayant de 1 à 20 atomes de carbone ou un radical phényle ou naphtyle, et T représente CH ou N, ou le cas échéant Z et T forment ensemble une structure de type =N-SO₂-C≡, =N-CS-C≡ ou =N-CO-C≡; et
Y est un groupe CH ou CR⁷ ou N, R⁷ étant un radical alcoyle linéaire ou ramifié ayant de 1 à 20 atomes de carbone ou un radical phényle ou un radical naphtyle,
et le composé a une valeur λₘₐₓ supérieure à 600 nm mesurée dans le DMF.

2. Composé suivant la revendication 1, **caractérisé en ce que** les radicaux R¹, R⁴ et R⁵ signifient respectivement un atome d'hydrogène.

3. Composé suivant la revendication 1 ou 2, **caractérisé en ce que** les radicaux R² et R³, qui sont identiques ou différents l'un de l'autre, ont un radical alcoyle ayant de 2 à 7 atomes de carbone.

4. Composé suivant la revendication 1, **caractérisé en ce que**, dans le cas où R¹, R², R³, R⁴ et/ou R⁵ est un radical hétéroaryle, celui-ci est choisi dans le groupe qui est formé par les thiophènes, les thiazoles et les pyridines, et dans le cas d'un radical aryle par les benzènes et les naphtalènes.

5. Composé suivant la revendication 1 ou 3, **caractérisé en ce que** l'un des radicaux R² et R³ a un groupe hydroxyalcoyle ou carboxyalcoyle.

6. Composé suivant la revendication 1, **caractérisé en ce qu'**un système cyclique formé de R² et de R³ comporte, outre l'atome d'azote, au moins un autre hétéroatome et, le cas échéant, est substitué par des groupes hydroxyalcoyle ou carboxyalcoyle.

7. Composé suivant l'une des revendications 1 à 6, **caractérisé en ce que** X est le soufre ou un cycle benzénique condensé en 1,2 et non substitué.

8. Composé suivant l'une des revendications 1 à 7, **caractérisé en ce que** Y est un groupe CH.

9. Composé suivant l'une des revendications 1 à 8, **caractérisé en ce que** Z est un groupe dicyanométhylène, alcoxycarbonylcyanométhylène, cyanimino- ou alcoxycarbonylimino.

10. Composé suivant l'une des revendications 1 à 8, **caractérisé en ce que** Z et T signifient ensemble =N-SO₂-C≡.

11. Procédé de préparation d'un composé chromophore de Formule développée 1 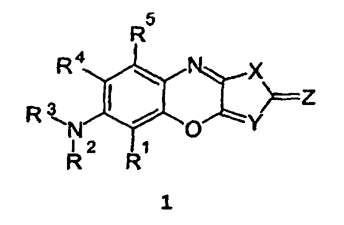 **caractérisé en ce que** l'on condense dans un solvant polaire et en présence d'une base à haute température un 5-amino-2-nitroso-phénol ou un sel avec un acide minéral de celui-ci de Formule développée 2 avec un composé à méthylène actif de Formule générale 3A ou 3B 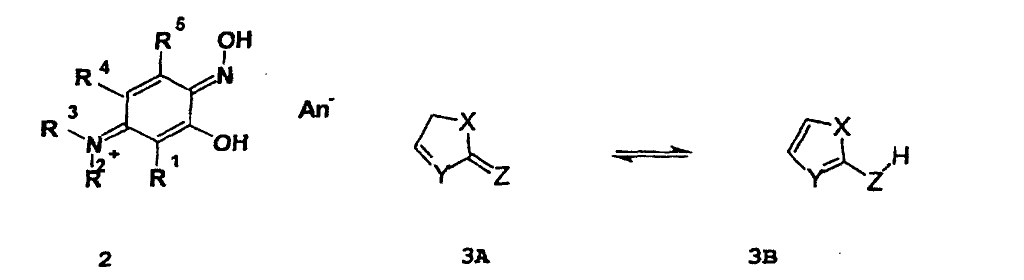 les radicaux R¹, R², R³, R⁴ et R⁵ ainsi que X, Y et Z ayant la signification indiquée à la revendication 1.

12. Procédé suivant la revendication 11, **caractérisé en ce que** l'on effectue la condensation des éduits 2 et 3A ou 3B en le rapport équimolaire dans le diméthylformamide, le diméthylacétamide ou la N-méthylpyrrolidone à une température comprise entre 120 et 150°C.

13. Utilisation d'un composé chromophore de Formule développée 1 suivant la revendication 1, dans laquelle R¹, R², R³, R⁴ et R⁵ ainsi que X, Y et Z ont la signification indiquée pour fabriquer des composants électro-optiques et photoniques.
